Europäisches Patentamt

European Patent Office

Office européen des brevets

(11) Veröffentlichungsnummer: **0 194 592**

**A2**

# (12) EUROPÄISCHE PATENTANMELDUNG

(21) Anmeldenummer: 86102997.3

(22) Anmeldetag: 06.03.86

(51) Int. Cl.⁴: **C 09 D 7/00**
C 08 J 3/08, C 08 J 9/36

(30) Priorität: 09.03.85 DE 3508419

(43) Veröffentlichungstag der Anmeldung:
17.09.86 Patentblatt 86/38

(84) Benannte Vertragsstaaten:
AT BE CH DE FR LI NL SE

(71) Anmelder: BASF Aktiengesellschaft
Carl-Bosch-Strasse 38
D-6700 Ludwigshafen(DE)

(72) Erfinder: Neubert, Gerhard, Dr.
Panoramastrasse 11
D-6719 Battenberg(DE)

(72) Erfinder: Melan, Michael, Dr.
Hans-Willmann-Strasse 4
D-6706 Wachenheim(DE)

(72) Erfinder: Schultze, Wolfgang
Schuetzenweg 1-3
D-6710 Frankenthal(DE)

(54) Lösungsmittelhaltige Beschichtungsstoffe, die für die Beschichtung von Schaumstoffen aus Polystyrol geeignet sind.

(57) Lösungsmittelhaltige Beschichtungsstoffe auf der Basis von Lösungsmittelgemischen von 2 bis 10 C-Atome enthaltenden Alkanolen und/oder aliphatischen oder cycloaliphatischen Estergruppen enthaltenden Weichmachern bzw. Hartharzen eines Molekulargewichts von 330 bis 3000 und von darin löslichen Polymerisatharzen sind für die Beschichtung von Schaumstoffen aus Polystyrol geeignet, da sie dieses nicht schädigen.

BASF Aktiengesellschaft

### Lösungsmittelhaltige Beschichtungsstoffe, die für die Beschichtung von Schaumstoffen aus Polystyrol geeignet sind

Die Erfindung betrifft lösungsmittelhaltige Beschichtungsstoffe auf der Basis von Polymerisatharzen für Schaumstoffe auf Polystyrol-Basis.

Beschichtungsstoffe dieser Art, die aromatische Lösungsmittel im Gemisch mit aromatenfreiem Testbenzin sowie gegebenenfalls bis zu 0,74 Gew.% Methanol enthalten, sind aus der DE-OS 32 09 854 bekannt. Sie dienen dem Schutz wärmedämmender Schaumstoff-Isolierungen auf Basis von Polystyrol-Hartschaumplatten gegen Witterungseinflüsse. Im Gegensatz zu wäßrigen Beschichtungsstoffen können sie auch bei verhältnismäßig ungünstiger feuchter und kalter Witterung aufgetragen werden. Derartige Beschichtungsstoffe bereiten jedoch oft aufgrund ihres Gehalts an aromatischen Lösungsmitteln, z.B. von Toluol, technische Probleme. Aromaten greifen die Lösungsmittel-empfindliche Schaumstoff-Isolierung allmählich an und lösen sie schließlich auf. An Stellen, an denen solche Beschichtungsstoffen längere Zeit nicht durchtrocknen können und Lösungsmittelreste einschließen, schrumpft die Schaumstoff-Isolierung zusammen. Die Wärmedämmung wird beeinträchtigt oder geht ganz verloren. Dies trifft auch bei einem Gehalt von 0,75 bis 1 Gew.% an Methanol zu.

Es wurde nun gefunden, daß lösungsmittelhaltige Beschichtungsstoffe auf der Basis von Polymerisat-Harzen und gegebenenfalls Pigmenten, Füllstoffen, Weichmachern und weiteren Lackrohstoffen und Lackhilfsstoffen für die Beschichtung von Schaumstoffen aus Polystyrol geeignet sind, wenn sie als Lösungsmittel ein Gemisch von (a) 60 bis 98 Gew.% im wesentlichen aromatenfreien Benzinkohlenwasserstoffen eines KB-Werts von höchstens 33 und 2 bis 40 Gew.% (b) 2 bis 10 C-Atome enthaltenden Alkanolen und/oder (c) aliphatischen oder cycloaliphatischen Estergruppen und vorzugsweise zusätzlich Hydroxylgruppen enthaltenden Weichmachern oder Hartharzen eines Molekulargewichts von 330 bis 3000, wobei der Sauerstoffgehalt, bezogen auf Estergruppen zwischen 6 und 14 Gew.%, der auf Hydroxylgruppen bezogene bis zu 16 Gew.% und der Gesamtsauerstoff-Gehalt der Komponente (c) mindestens 9 Gew.% beträgt, und (d) ein darin lösliches Polymerisat-Harz enthalten. Durch die neuen Beschichtungsstoffe werden Schaumstoffe auf Polystyrol-Basis auch bei langzeitiger Einwirkung nicht angegriffen.

Als im wesentlichen aromatenfreie Benzinkohlenwasserstoffe (a) eignen sich aromatenfreie Testbenzine, d.h. handelsübliche, Kohlenwasserstoffgemische mit einem KB-Wert von höchstens 33. Bevorzugt sind isoparaffinreiche Testbenzine mit einem KB-Wert von unter 28. Der KB-Wert, d.h. der Kauributanol-Wert, wird nach ASTM-D 1133 bestimmt. Das Lösungsmittel-gemisch enthält zusätzlich zu der Komponente (a) noch 2 bis 40 Gew.% an Alkanolen (b) und/oder Estergrupen enthaltende Weichmacher oder Hartharze (c), wobei solche Lösungsmittelgemische vorgezogen werden, in denen die Summe der Gewichte an Alkanolen (b) und Komponente (c) mindestens 5 Gew.%, bezogen auf das Lösugsmittelgemisch beträgt. Als Alkanole (b) werden bevorzugt Gemische aus 2 bis 4 Kohlenstoffatome enthaltenden (niederen) Alkanolen mit einem geringen Anteil von 5 bis 10 Kohlenstoffatomen enthaltenden (höheren) Alkanolen eingesetzt. Beispiele für niedere Alkanole sind Ethanol, Isopropanol, tert.-Butanol und bevorzugt n-Propanol, n-Butanol und Isobutanol. Als höhere Alkanole kommen z.B. Amylalkohol, n-Hexanol, 2-Ethylhexanol oder ein technisches Isomerengemisch von Isodecanol in Betracht. Besonders bevorzugt ist 2-Ethylhexanol. Anstelle der höheren Alkanole können auch andere mit Isoparaffinen mischbare langsamer als n-Butanol verdunstende Lösungsmittel eingesetzt werden. Als solche kommen vor allem Alkylmonoglykolether oder Alkyldiglykolether in Frage, z.B. Butylglykol, Butyldiglykol, Dipropylenglykolmonomethylether und bevorzugt Hexylglykol. Sie sind jedoch weniger geeignet und können nur in geringen Anteilen von unter 10 Gew.%, im all-gemeinen von weniger als 3 Gew.%, bezogen auf das gesamte Lösemittel a) und b), mitverwendet werden, wenn eine Beschädigung der Schaumstoff-Isolierung langzeitig vermieden werden soll.

Als Komponente (c) enthalten die erfindungsgemäßen Beschichtungsstoffe aliphatische oder cycloaliphatische Estergruppen und vorzugsweise zusätzlich Hydroxylgruppen enthaltende Weichmacher oder Hartharze, die jeweils ein Molekulargewicht von 330 bis 3000 haben, wobei der Sauerstoffgehalt dieser Komponente, bezogen auf Estergruppen, zwischen 6 und 14 Gew.%, vorzugsweise zwischen 9 und 12 Gew.%, derjenige, bezogen auf Hydroxylgruppen, bis zu 16 Gew.%, vorzugsweise 6 bis 13 Gew.% und der Gesamtsauerstoffgehalt der Komponente (c) mindestens 9 Gew.% beträgt. Komponente (c) kann die Alkanole (b) teilweise oder vollständig ersetzen. Zusammen enthält das Lösungsmittelgemisch an Alkanolen (b) und Komponente (c) mindestens 5 Gew.%, vorzugsweise mehr als 15 Gew.%, insbeson-dere 25 bis 60 Gew.%, bezogen auf das Polymerisat-Harz (d). Außerdem liegt die Komponente (c) in dem Lösungsmittelgemisch vorzugsweise in Mengen von 10 bis 40 Gew.%, insbesondere von 20 bis 30 Gew.%, bezogen auf das Polymerisat-Harz (d) vor. Als Komponente (c) eignen sich vorzugsweise Veresterungsprodukte aus natürlichen, 14 bis 26 C-Atome enthaltenden Fettsäuren und 1- oder mehrwertigen Alkanolen, wobei das Molekulargewicht der Veresterungsprodukte vorzugsweise von 350 bis 1500 beträgt. Beispiele hierfür sind Butylstearat, natürliche und synthetische Fettsäuretriglyceride wie Sojaöl und besonders Leinöl. Bevorzugt sind hydroxylgruppenhaltige Fettsäureester, wie die Teilveresterungsprodukte natürlicher Fettsäuren mit mehrwertigen Alkanolen, wie Glycerin, Pentaerythrit und Sorbitan und Ricinusöl. Beispiele hierfür sind die Mono- und Diester des Pentaerythrits mit Sojaölfettsäure, Leinölfettsäure oder Ölsäure sowie Umesterungsprodukte der natürlichen Öle, wie Ricinusöl und Leinöl, mit Glycerin oder Pentaerythrit. Ein Teil der Hydroxylgruppen derartiger Teilveresterungsprodukte kann auch durch zweiwertige Carbonsäuren, wie Phthalsäureanhydrid oder Isophthalsäure im Rahmen des für die Komponente (c) vorgesehenen Estergruppen-Gehalts und Molekulargewichts verestert sein. Schließlich kann die Komponente (c) zusätzlich bis zu 10 % ihres Gewichts an Ethersauerstoff enthalten, und Beispiele für solche Produkte sind epoxidiertes Sojaöl oder Halbester von Fettsäuren, wie Leinölfettsäure mit Diethylenglykol oder Dipropylenglykol.

Anstelle derartiger Fettsäureester können auch entsprechende Ester von natürlichen Harzsäuren, z.B. der Abietinsäure eingesetzt werden sowie nachbehandelte Öle, z.B. isomerisiertes Leinöl sowie niedermolekulare polymerisierte oder geblasene Öle. Bevorzugt sind insbesondere Gemische des Leinöls mit hydroxylgruppenhaltigen Fettsäureestern, wie Ricinusöl, Glycerinmonoricinoleat und Sorbitandioleat, im Mengenverhältnis von 70:30 bis 20:80. Durch die Mitverwendung der Komponente (c), insbesondere der Fettsäureester, kann der Alkanolgehalt der Beschichtungsstoffe nieder gehalten werden, ohne daß eine Beschädigung von Polystyrol-Schaumstoffen bei der Anwendung eintritt. Bei ihrer Mitverwendung kann zudem auf die Mitverwendung von höhersiedenden Alkanolen, die verhältnismäßig stark riechen, als Filmbildehilfsmittel verzichtet werden.

Das Mischungsverhältnis von Alkanolen (b) und Komponente (c) einerseits zu Benzinkohlenwasserstoffen andererseits beträgt 2:98 bis 40:60, vorzugsweise 5:95 bis 30:70, insbesondere 10:90 bis 20:80.

Als Polymerisat-Harze (d) die sich in dem erfindungsgemäß zu verwendenden Lösungsmittelgemisch lösen, können beispielsweise Copolymere des Isobutylmethacrylats mit langkettigen (Meth)acrylsäureestern eingesetzt werden. Bevorzugt werden solche, die als weitere Comonomere Styrol und/oder tert.-Butylacrylat einpolymerisiert enthalten, wie sie z.B. in der EP 42 502 beschrieben sind. Copolymere mit hohem Erweichungspunkt nach DIN 53 180 von über $80^0$ C, vorzugsweise über $100^0$ C werden bevorzugt. Sie lassen sich mit besonders hohen Anteilen an Weichmachern verschneiden. Von besonderem Interesse sind Copolymerisate eines K-Werts zwischen 25 und 70, insbesondere von 30 bis 50, aus (A) 10 bis 40 Gew.% Styrol, (B) 10 bis 50 Gew.% tert.-Butylacrylat und/oder Vinylpivalat, (C) 20 bis 40 Gew.% Isobutylmethacrylat, (D) 5 bis 20 Gew.% (Meth)acrylsäureester,

10 bis 20 C-Atome enthaltender Alkanole und (E) 0 bis 5 Gew.% monoolefinisch ungesättigten 3 bis 5 C-Atome enthaltenden Mono- und/oder Dicarbonsäuren und/oder deren β-Hydroxyalkylestern und/oder Monoalkylestern
von Dicarbonsäuren, bei denen die Komponente (D) bezogen auf die Komponente (A) in Mengen zwischen 20 und 50 Gew.% einpolymerisiert und die
Summe der unter (A) bis (E) aufgeführten Gewichtsprozente 100 ist. Die
K-Werte können nach DIN 53 726 bzw. nach H. Fikentscher, Cellulose Chem.,
Vol. 13 [A 32], Seite 58 bestimmt werden. Derartige Copolymerisate sind
in handelsüblichen Testbenzinen eines Aromatengehalts von etwa 18 % bzw.
eines KB-Werts über 36 löslich, in aromatenfreien Testbenzinen eines
KB-Werts unter 34 bereits nicht mehr vollständig löslich. Ebenso können
sie in allen Alkanolen unlöslich sein. Sie lösen sich oft erst in dem
erfindungsgemäß zu verwendenden Lösungsmittel-Gemisch und sind darin bis
zu Temperaturen, die auch unter 0°C liegen können, löslich.

Als zusätzliche Weichmacher können die neuen Beschichtungsstoffe ferner
z.B. flüssige Chlorparaffine oder deren Gemische mit festen Chlorparaffinen enthalten, doch soll deren Menge im allgemeinen unter
40 Gew.%, bezogen auf das Polymerisatharz (d) liegen.

Die erfindungsgemäßen Beschichtungsstoffe können in an sich üblicher
Weise mit weiteren, damit verträglichen Lackrohstoffen, Lackhilfsstoffen
sowie Pigmenten und Füllstoffen modifiziert werden und können dann gegebenenfalls auch als Fassadenfarben, Putze oder Haftgrundierungen verwendet werden. Als Modifizierungsmittel kommen auch Hartharze, Verdickungsmittel, Tixotropierungsmittel, Dispergiermittel-Fasern, Stabilisatoren
sowie gegebenenfalls zusätzliche Polymerisat- oder Polykondensationsharze
in Frage.

Die in den folgenden Beispielen angegebenen Teile und Prozente beziehen
sich, wenn nicht anders angegeben, auf das Gewicht.

Beispiel 1

Zur Herstellung einer Beschichtungsmasse werden die folgenden Komponenten
nacheinander gelöst und vermischt:

100 Teile aromatenfreies Testbenzin (KB-Wert 27, Siedebereich 160 bis
180°C)
15 Teile Isobutanol
3 Teile 2-Ethylhexanol
50 Teile eines in üblicher Weise hergestellten Copolymerisats aus 28 %
Styrol, 40 % Isobutylmethacrylat, 10 % Laurylacrylat und 22 %
tert.-Butylacrylat

20 Teile Chlorparaffin, flüssig (Chlorgehalt 60 %)

60 Teile Rutil

120 Teile Calcit

300 Teile Feinsand,

2 Teile handelsübliches Verdickungsmittel auf Basis modifizierter Schichtsilikate

2 Teile handelsübliches Verdickungsmittel auf Basis von hydrierten Rizinusöl-Derivaten

man erhält eine pastöse Masse, die z.B. dickschichtig auf Polystyrol-Schaumstoffplatten mit einer Kelle aufgetragen werden kann. Die auf Polystyrol-Schaumstoffplatten aufgetragene Beschichtung haftet nach dem Trocknen gut auf dem Untergrund.

Zu Überprüfung einer eventuellen Beschädigung von Polystyrolschaumstoff werden Streifen der Abmessungen 20 cm:2 cm:1 cm einer Dichte von 0,018 g/l eine Woche in die Beschichtungsmasse eingetaucht. Der Schaumstoff wird hierdurch nicht angegriffen.

Beispiel 2

100 Teile aromatenfreies Testbenzin (KB-Wert 26, Siedebereich 175 bis 190°C)

18 Teile n-Propanol

50 Teile des in Beispiel 1 angegebenen Isobutylmethacryl-Copolymerisats

5 Teile Leinöl

5 Teile Rizinusöl

10 Teile Chlorparaffin, flüssig (Chlorgehalt 60 %)

100 Teile Rutil

400 Teile Calcit, grobkörnig

50 Teile Kieselgur

4 Teile Verdickungsmittel auf Basis hydrierten Rizinusöl-Derivate

Die Komponenten werden in der angegebenen Reihenfolge nacheinander gelöst und vermischt und ergeben einen Beschichtungsstoff für Polystyrol-Schäume, der diese nicht schädigt.

Beispiel 3

Man mischt bzw. löst in der angegebenen Reihenfolge die folgenden Komponenten:

100 Teile aromatenfreies Testbenzin (KB-Wert 27, Siedebereich 160 bis 180°C)

10 Teile n-Propanol

50 Teile Isobutylmethacrylat-Copolymerisat, wie in Beispiel 1 angegeben

7,5 Teile Leinöl

7,5 Teile Glycerinmonoricinoleat

70 Teile Rutil

100 Teile Schwerspat

Der erhaltene Beschichtungsstoff eignet sich zum Beschichten von schaumförmigem Polystyrol sowie von anderen metallischen und nicht-metallischen Materialien.

Auch die in den Beisielen 1 bis 3 zunächst erhaltenen pigmentfreien Lösungen des Isobutylmethacrylat-Copolymerisats können zum Beschichten von schaumförmigen Polystyrol-Teilen verwendet werden und greifen Polystyrol-Schaum nicht an. Sie trocknen bei Raumtemperatur zu klaren Filmen auf und sind bei Temperaturen bis hinab zu etwa 0°C stabil.

**0194592**

## Patentansprüche

1. Lösungsmittelhaltige Beschichtungsstoffe, die für die Beschichtung von Schaumstoffen aus Polystyrol geeignet sind auf Basis von Polymerisatharzen und gegebenenfalls Pigmenten, Füllstoffen, Weichmachern und weiteren Lackrohstoffen und Lackhilfstoffen, dadurch gekennzeichnet, daß sie als Lösungsmittel ein Gemisch von (a) 60 bis 98 Gew.% im wesentlichen aromatenfreien Benzinkohlenwasserstoffen eines KB-Werts von höchstens 33 und 2 bis 40 Gew.%, (b) 2 bis 10 C-Atome enthaltenden Alkanolen und/oder (c) eines aliphatischen oder cycloaliphatischen Estergruppen und vorzugsweise zusätzlich Hydroxylgruppen enthaltenden Weichmachers oder Hartharzes eines Molekulargewichts von 330 bis 3000, wobei der Sauerstoffgehalt, bezogen auf Estergruppen zwischen 6 und 14 Gew.%, derjenige, bezogen auf Hydroxylgruppen bis zu 16 Gew.% und der Gesamtsauerstoff-Gehalt der Komponente (c) mindestens 9 Gew.% beträgt und (d) ein in dem Lösungsmittel-Gemisch lösliches Polymerisat-Harz enthalten.

2. Beschichtungsstoffe nach Anspruch 1, dadurch gekennzeichnet, daß die Benzinkohlenwasserstoffe überwiegend aus Isoparaffinen bestehen und einen KB-Wert unter 28 aufweisen.

3. Beschichtungsstoffe nach den Ansprüchen 1 bis 2, dadurch gekennzeichnet, daß das Polymerisat-Harz einen Erweichungspunkt nach DIN 53 180 über 80°C hat.

4. Beschichtungsstoffe nach den Ansprüchen 1 bis 3, dadurch gekennzeichnet, daß das Polymerisat-Harz Isobutylmethacrylat, Styrol und/oder tert.-Butylacrylat einpolymerisiert enthält.

ro0089